# EUROPÄISCHE PATENTSCHRIFT

(11) **EP 1 358 094 B1**
(45) Veröffentlichungstag und Bekanntmachung des Hinweises auf die Patenterteilung: **29.10.2008**
(21) Anmeldenummer: 02703511.2
(22) Anmeldetag: 31.01.2002
(51) Int. Cl.: B60R 21/09

(54) **VORRICHTUNG ZUR LAGERUNG EINES PEDALHEBELS EINES KRAFTFAHRZEUGES**
DEVICE FOR FIXING A PEDAL LEVER OF A MOTOR VEHICLE
DISPOSITIF DE FIXATION D'UN LEVIER DE PEDALE D'UN VEHICULE AUTOMOBILE

(30) Priorität: 06.02.2001 DE 10105546
(43) Veröffentlichungstag der Anmeldung: 05.11.2003
(73) Patentinhaber: ZF Lemförder Metallwaren AG, 49441 Lemförde (DE)
(72) Erfinder: BURGSTALER, Andree, 32351 Dielingen (DE); DÜTZ, Jan, 49401 Damme (DE); PÄTZOLD, Simone, 49076 Osnabrück (DE)
(86) Internationale Anmeldenummer: PCT/DE2002/000350
(87) Internationale Veröffentlichungsnummer: WO 2002/068248

(56) Entgegenhaltungen:
- WO-A-99/59844
- DE-A- 19 515 852
- DE-A- 19 718 384
- GB-A- 2 352 430

## Beschreibung

Die Erfindung betrifft eine Vorrichtung zur Lagerung eines Pedalhebels für ein Kraftfahrzeug nach dem Oberbegriff des Patentanspruches 1.

Die zunehmenden Anforderungen an Kraftfahrzeuge hinsichtlich einer Erhöhung der Sicherheit zeigen sich in zahlreichen Systemen. Bei Pedalbefestigungen besteht ein bekanntes Unfallrisiko darin, dass eine Verformung des Vorderwagens sich unmittelbar oder mittelbar auf die Pedale auswirkt und diese in den Fußraum des Kraftfahrzeuges hinein bewegt werden. Die für den Fahrzeugführer damit verbundenen Risiken sind in schweren Verletzungen der unteren Gliedmaßen zu sehen, wie sie durch das Einklemmen zwischen den Pedalen hervorgerufen werden können.

Die DE 196 31 212 C1 beschreibt eine Vorrichtung zur Lagerung eines Pedalhebels eines Kraftfahrzeuges, der um wenigstens ein durchtrennbares Lagerelement schwenkbar in einem Gehäuse aufgenommen ist. Durch eine Verlängerung des Pedalhebels über seinen Drehpunkt hinaus wird gemäß dieser Schrift ein Anschlag geschaffen, der sich bei einer unfallverursachten äußeren Krafteinwirkung gegen den Querträger des Kraftfahrzeuges abstützt. Durch die gleichzeitig erfolgende Bewegungseinleitung des unterhalb des Drehpunktes mit dem Pedalhebel verbundenen Bremskraftverstärkers auf den Pedalhebel erfolgt eine Zerstörung des Lagerelementes, das vorliegend ein Lagerbolzen ist, sodass der Pedalhebel freigegeben wird. Eine ähnliche Vorrichtung wird auch durch die WO-A-99 59844 veröffentlicht.

Als nachteilig hat sich bei einer derartigen Lösung herausgestellt, dass einerseits der Pedalhebel wegen des zusätzlich vorzusehenden Anschlages ein erhöhtes Eigengewicht aufweist und andererseits eine gezielte, lokale Abtrennung des Lagerelementes nicht gewährleistbar ist.

Technische Problemstellung der vorliegenden Erfindung ist es, eine Vorrichtung zur Lagerung eines Pedalhebels zu schaffen, die das Verletzungsrisiko und den Schweregrad der Verletzungen des Fahrzeugführers herabsetzt.

Gelöst wird diese technische Problemstellung für eine gattungsgemäße Vorrichtung zur Lagerung eines Pedalhebels mit den kennzeichnenden Merkmalen des Patentanspruches 1.
Ausgestaltungen der Erfindung sind Gegenstand der Unteransprüche.

Dementsprechend weist die erfindungsgemäße Vorrichtung zur Lagerung eines Pedalhebels eines Kraftfahrzeuges, der um wenigstens ein durchtrennbares Lagerelement schwenkbar in einem Gehäuse aufgenommen ist, einen Trennkeil auf, der sich mit einem Ende gegen ein Kraftfahrzeugbauteil abstützt. Das gegenüberliegende Ende dieses Trennkeils ist als Schneidkante ausgebildet und derart dem Lagerelement zugewandt angeordnet, dass infolge einer beispielsweise durch einen Unfall verursachten äußeren Krafteinwirkung und einer daraus resultierenden Relativbewegung zwischen Trennkeil und Lagerelement eine Abscherung des Lagerelementes durch den Trennkeil erfolgt.

Die erwähnte Relativbewegung ergibt sich entweder aus der Verformung des Kraftfahrzeugbauteiles oder aus der Bewegung des Gehäuses, die ihrerseits aus einer Verformung von Teilen des Kraftfahrzeuges herrührt. Durch die erfindungsgemäße Lösung wird dementsprechend bewusst die Abscherung, das heißt die Zerstörung des Lagerelementes herbeigeführt, um den erforderlichen Insassenschutz zu gewährleisten. Als Lagerelement kann ein Lagerungsbolzen oder eine Lagerbuchse dienen, die den Pedalhebel schwenkbar lagern.

Die Vorrichtung ist insgesamt sehr einfach aufgebaut und kann nahezu vollständig aus Leichtbauwerkstoffen, wie Kunststoff hergestellt sein, sodass auch der Formgebung nahezu keine Grenzen gesetzt sind.

Gemäß einer Ausgestaltung der Erfindung wird vorgeschlagen, an dem Gehäuse ein Widerlager zur Anlage und gleitbeweglichen Führung einer Oberfläche des Trennkeiles vorzusehen. Dieses Widerlager kann eine Rampenfunktion aufweisen, sodass der Trennkeil seine Scherwirkung auf das Lagerelement in verstärktem Maße ausüben kann.

Zur Verbesserung der Scherwirkung ist es vorteilhaft, den Trennkeil auf der dem Lagerelement zugewandten Seite mit mindestens einer keilförmigen oder bogenförmigen Schneidkante auszustatten. Dadurch kann der Weg klar beziehungsweise eindeutig definiert werden, der vom Trennkeil zurückgelegt werden muss, damit das Lagerelement vollständig abgetrennt ist.

Der Trennkeil kann von einer separaten Halterung zwischen dem Querträger und dem Lagerelement gehalten sein. Bevorzugt ist der Trennkeil aber lose zwischen dem Querträger und dem Lagerelement eingesetzt. Dadurch kann eine aufwendige Montage entfallen.

Eine Weiterbildung der Erfindung kann ferner darin gesehen werden, dass das Lagerelement zwei zueinander beabstandete Wangen des Gehäuses durchsetzt und der Pedalhebel etwa mittig zwischen diesen Wangen auf dem Lagerelement angeordnet wird. Dabei ist zwischen dem Pedalhebel und zumindest einer Wangenoberfläche der jeweils zugeordneten Wange ein Abstand vorhanden, der die Schneidkante des Trennkeiles aufnimmt.

Wie zuvor bereits erwähnt kann die Relativbewegung zwischen Trennkeil und Lagerelement auch dadurch erreicht werden, dass das Kraftfahrzeugteil, an dem das Gehäuse befestigt ist, verformt wird. Dementsprechend ist es sinnvoll, das Gehäuse an der Stirnwand im Fußbereich der Fahrerseite des Kraftfahrzeuges zu befestigen, da die Stirnwand bei einem Unfall zumeist relativ stark verformt wird und dadurch die vorteilhafte Wirkung der erfindungsgemäßen Lösung bereits zu einem recht frühen Zeitpunkt erreicht wird. Das Kraftfahrzeugbauteil kann dementsprechend der nächstgelegene Querträger sein, der zumeist auch bei schweren Unfällen nur wenig verformt wird und somit eine optimale Abstützung des Trennkeiles ermöglicht.

Zur Erleichterung der Abscherung ist es darüber hinaus angebracht und von Vorteil, das Lagerelement mit mindestens einer Sollbruchstelle zu versehen. Die Sollbruchstelle befindet sich dabei im Bereich der Schneidkante des Trennkeiles. Ferner kann das Lagerelement als ein einteiliger oder ein zweiteiliger Lagerbolzen ausgeführt werden. Die Zweiteilung hat insbesondere Montagevorteile. Hierbei ist jedoch sicherzustellen, dass bei einem Unfall jeder der Bolzenteile durch den Trennkeil abgeschert wird. Als Lagerelement ist entsprechend der Erfindung jedoch auch eine Lagerbuchse anzusehen, die ebenfalls durch die Wirkung der Scherkraft abscherbar ist.

Da beispielsweise das Bremspedal eines Kraftfahrzeuges mit einem Bremskraftverstärker verbunden ist und dieser über eine Bremsstange verfügt, kann sich die Verformung der Stirnwand in diesem Bereich besonders stark auswirken, sodass die Gefahr besteht, dass der Pedalhebel vor Abscherung des Lagerelementes um einen nicht tolerierbar großen Betrag in den Fahrgastraum hinein bewegt wird. Um diesem Umstand zu begegnen wird weiterhin vorgeschlagen, bei einer erfindungsgemäßen Lösung an dem Gehäuse ein Sperrglied vorzusehen, das bei einem Unfall eine Ausweichbewegung des Pedals in Richtung Fahrgastinnenraum begrenzt.

Zur Festlegung des normalerweise lose zwischen Querträger und Pedallagerung eingesetzten Trennkeiles kann ferner zwischen Trennkeil und Gehäuse eine Sicherung zur Halterung am Gehäuse vorgesehen werden.

Ein Ausführungsbeispiel der Erfindung wird nachstehend unter Bezugnahme auf die Zeichnung näher erläutert.

Es zeigen:
- Figur 1:: eine ausschnittsweise Schnittdarstellung einer Vorrichtung zur Lagerung eines Pedalhebels,
- Figur 2:: eine ausschnittsweise Seitenansicht einer Vorrichtung zur Lagerung eines Pedalhebels
und
- Figur 3:: ein Lagerelement für eine Vorrichtung zur Lagerung eines Pedalhebels.

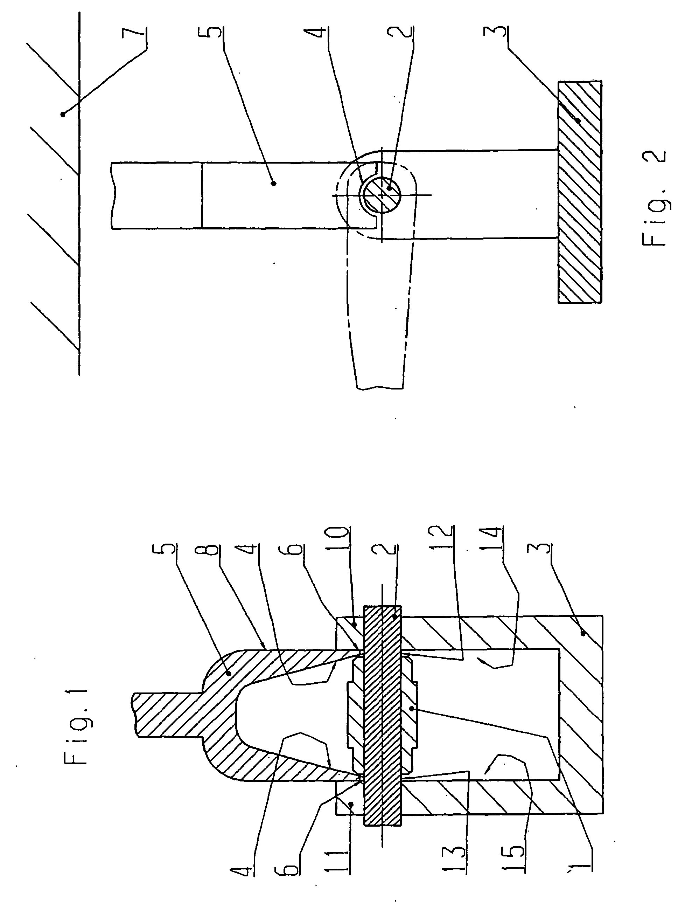

Die in der Figur 1 gezeigte Vorrichtung enthält zur Lagerung eines Pedalhebels 1 eines Kraftfahrzeuges ein durchtrennbares Lagerelement 2, das schwenkbar in einem Gehäuse 3 aufgenommen ist. Das Gehäuse 3 wird an der Stirnwand im Fußbereich des Kraftfahrzeuges befestigt. Ein Abschnitt eines Trennkeiles 5 ist als Schneidkante 4 ausgebildet, die eine bogenförmige Gestalt aufweist, wie dies anschaulich aus der Darstellung in Figur 2 hervorgeht.

Der Trennkeil 5 stützt sich gegen ein Kraftfahrzeugbauteil 7 ab. Das Kraftfahrzeugbauteil 7 ist hier ein Querträger, der deshalb für die Anlage des Trennkeiles nützlich ist, weil er auch bei schweren Unfällen zumeist nur geringförmig verformt wird, sodass eine sichere, nahezu unveränderliche Abstützung des Trennkeiles 5 möglich wird. Wie ersichtlich ist, wird der Trennkeil 5 lose zwischen Querträger 7 und Lagerelement 2 eingesetzt. Eine aufwendige Montage kann daher entfallen. Lediglich als Verliersicherung für den Transport der Vorrichtung ist zwischen Trennkeil 5 und Gehäuse 3 an jedem Schenkel je eine in den Figuren nicht gezeigte Sicherung vorhanden, die vorzugsweise aus weichem Material besteht, sodass die Scherwirkung im Bedarfsfall nicht beeinflusst wird.

Der Trennkeil 5, der infolge einer durch einen Unfall verursachten äußeren Krafteinwirkung durch eine Relativbewegung zwischen Trennkeil 5 und Lagerelement 2 unter Aufbringung einer Scherkraft die Abscherung des Lagerelementes 2 bewirkt, ist bei der dargestellten Ausführung im Querschnitt U-förmig gestaltet, sodass er zwei Schneidkanten 4 aufweist.

Diese Ausführung des Trennkeiles 5 ist von Vorteil, da bei Einwirkung der äußeren Kraft die Scherkraft gleichmäßig an zwei unterschiedlichen Bereichen des Lagerelementes 2 aufgebracht werden kann, sodass das Lagerelement sicher und zuverlässig durchtrennbar ist, wenn hierzu die Notwendigkeit besteht. Das gezeigte Lagerelement 2 durchsetzt zwei zueinander beabstandete Wangen 10, 11 des Gehäuses 3. Der Pedalhebel 1 ist etwa mittig zwischen diesen Wangen 10, 11 auf dem Lagerelement 2 angeordnet, sodass beiderseits des Pedalhebels 1 ein Abstand 12, 13 zwischen dem Pedalhebel 1 und der Wangenoberfläche 14, 15 der jeweils zugeordneten Wange 10 bzw. 11 vorhanden ist. In diese Abstände 12, 13 greift je eine der Schneikanten 4 des Trennkeiles 5 ein. Ferner ist an dem Gehäuse 3, an beiden Wangenoberflächen 14, 15 jeweils ein Widerlager 6 zur gleitbeweglichen Anlage und Führung der äußeren Oberfläche 8 des Trennkeiles 5 vorhanden. Aus der Darstellung in den Figuren ist ersichtlich, dass das Widerlager 6 und die zugeordnete Oberfläche 8 des Trennkeiles 5 ebene Oberflächen sind, die dadurch die genannte Gleitbewegung der Bauteile erlauben.

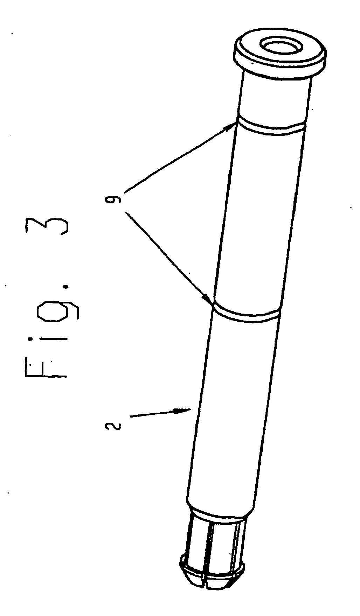

Das Lagerelement 2 weist wie dies aus der Figur 3 hervorgeht zwei Sollbruchstellen 9 auf und ist hierbei als einteiliger Lagerbolzen ausgeführt.

Zur Vermeidung einer unzulässig weiten Bewegung des Pedalhebels in den Fahrgastraum hinein wird an dem Gehäuse 3 ein in den Figuren nicht dargestelltes Sperrglied angebracht, das bei einem Unfall die Ausweichbewegung des Pedals in Richtung Fahrgastinnenraum begrenzt.

### Bezugszeichenliste:

- 1: Pedalhebel
- 2: Lagerelement
- 3: Gehäuse
- 4: Schneidkante
- 5: Trennkeil
- 6: Widerlager
- 7: Kraftfahrzeugbauteil
- 8: Oberfläche
- 9: Sollbruchstelle
- 10: Wange
- 11: Wange
- 12: Abstand
- 13: Abstand
- 14: Wangenoberfläche
- 15: Wangenoberfläche

## Patentansprüche

1. Vorrichtung zur Lagerung eines Pedalhebels (1) eines Kraftfahrzeuges, der um wenigstens ein durchtrennbares Lagerelement (2) schwenkbar in einem Gehäuse (3) aufgenommen ist,
**dadurch gekennzeichnet, dass**
ein sich einseitig gegen ein Kraftfahrzeugbauteil (7) abstützender Trennkeil (5) mit wenigstens einer an dem Trennkeil (5) ausgebildeten Schneidkante (4) derart dem Lagerelement (2) zugewandt angeordnet ist, dass infolge einer äußeren Krafteinwirkung durch eine Relativbewegung zwischen Trennkeil (5) und Lagerelement (2) eine Abscherung des Lagerelementes (2) durch den Trennkeil (5) erfolgt.

2. Vorrichtung zur Lagerung eines Pedalhebels nach Anspruch 1,
**dadurch gekennzeichnet, dass**
an dem Gehäuse (3) zumindest ein Widerlager (6) zur Anlage und gleitbeweglichen Führung einer Oberfläche (8) des Trennkeiles (5) vorhanden ist.

3. Vorrichtung zur Lagerung eines Pedalhebels nach einem der vorstehend genannten Ansprüche,
**dadurch gekennzeichnet, dass**
der Trennkeil (5) auf der dem Lagerelement (2) zugewandten Seite eine keilförmige oder bogenförmige Schneidkante (4) aufweist.

4. Vorrichtung zur Lagerung eines Pedalhebels nach Anspruch 3,
**dadurch gekennzeichnet, dass**
das Lagerelement (2) zwei zueinander beabstandete Wangen (10, 11) des Gehäuses (3) durchsetzt, der Pedalhebel (1) etwa mittig zwischen diesen Wangen (10, 11) auf dem Lagerelement (2) angeordnet und zwischen Pedalhebel (1) und Wangenoberfläche (14, 15) der jeweils zugeordneten Wange (10 bzw. 11) wenigstens einseitig ein Abstand (12, 13) vorhanden ist, der die Schneidkante (4) des Trennkeiles (5) aufnimmt.

5. Vorrichtung zur Lagerung eines Pedalhebels nach einem der vorstehend genannten Ansprüche,
**dadurch gekennzeichnet, dass**
das Gehäuse (3) an der Stirnwand im Fußbereich der Fahrerseite des Kraftfahrzeuges befestigt und das Kraftfahrzeugbauteil (7) ein Querträger ist.

6. Vorrichtung zur Lagerung eines Pedalhebels nach einem der vorstehend genannten Ansprüche,
**dadurch gekennzeichnet, dass**
das je Schneidkante (4) eine Sollbruchstelle (9) aufweisende Lagerelement (2) ein einteiliger oder ein zweiteiliger Lagerbolzen ist.

7. Vorrichtung zur Lagerung eines Pedalhebels nach einem der vorstehend genannten Anspruch,
**dadurch gekennzeichnet, dass**
an dem Gehäuse (3) ein Sperrglied vorhanden ist, das bei einem Unfall eine Ausweichbewegung des Pedals in Richtung Fahrgastinnenraum begrenzt.

8. Vorrichtung zur Lagerung eines Pedalhebels nach einem der vorstehend genannten Ansprüche,
**dadurch gekennzeichnet, dass**
der Trennkeil (5) eine Sicherung zur Halterung am Gehäuse (3) aufweist.

## Claims

1. Device for mounting a pedal lever (1) of a motor vehicle which is accommodated in a housing (3) so as to be pivotable about at least one severable bearing element (2),
**characterised in that**
a separating wedge (5), which is supported on one side against a motor vehicle component (7), with at least one cutting edge (4) formed on the separating wedge (5), is arranged facing the bearing element (2) such that the bearing element (2) is shorn off by the separating wedge (5) as a result of an external action of force through a relative movement between the separating wedge (5) and the bearing element (2).

2. Device for mounting a pedal lever according to Claim 1,
**characterised in that**
at least one abutment (6) is provided on the housing (3) for contacting a surface (8) of the separating wedge (5) and guiding it with a sliding movement.

3. Device for mounting a pedal lever according to any one of the preceding Claims,
**characterised in that**
the separating wedge (5) has a wedge-shaped or an arc-shaped cutting edge (4) on the side which faces the bearing element (2).

4. Device for mounting a pedal lever according to Claim 3,
**characterised in that**
the bearing element (2) passes through two side walls (10, 11), which are spaced apart, of the housing (3), the pedal lever (1) is arranged approximately centrally between these side walls (10, 11) on the bearing element (2), and there is a spacing (12, 13) at least on one side between the pedal lever (1) and the side wall surface (14, 15) of the respective associated side wall (10 or 11), which spacing accommodates the cutting edge (4) of the separating wedge (5).

5. Device for mounting a pedal lever according to any one of the preceding Claims,
**characterised in that**
the housing (3) is fastened to the front wall in the footwell of the driver's side of the motor vehicle, and the motor vehicle component (7) is a cross member.

6. Device for mounting a pedal lever according to any one of the preceding Claims,
**characterised in that**
a bearing element (2) having a predetermined breaking point (9) for each cutting edge (4) is a one-part or a two-part bearing bolt.

7. Device for mounting a pedal lever according to any one of the preceding Claims,
**characterised in that**
a blocking member is provided on the housing (3), which member limits a yielding movement of the pedal in the direction of the passenger compartment interior in the event of an accident.

8. Device for mounting a pedal lever according to any one of the preceding Claims,
**characterised in that**
the separating wedge (5) has a securing means for holding it on the housing (3).

## Revendications

1. Dispositif pour supporter un levier de pédale (1) d'un véhicule automobile, qui est reçu dans un boîtier (3), de manière à pouvoir pivoter autour d'au moins un élément de palier (2) sectionnable,
**caractérisé en ce que**
un coin de sectionnement (5), prenant appui d'un côté contre un composant du véhicule automobile (7), est disposé tourné vers l'élément de palier (2), par au moins une arête de coupe (4) réalisée sur le coin de sectionnement (5), de manière qu'à la suite de l'action d'une force extérieure et par un mouvement relatif entre le coin de sectionnement (5) et l'élément de palier (2), il se produise un cisaillement de l'élément de palier (2) par le coin de sectionnement (5).

2. Dispositif pour supporter un levier de pédale selon la revendication 1,
**caractérisé en ce que**
sur le boîtier (3) il est prévu au moins une butée (6) pour l'application et le guidage à glissement d'une surface (8) du coin de sectionnement (5).

3. Dispositif pour supporter un levier de pédale selon l'une quelconque des revendications 1 ou 2,
**caractérisé en ce que**
le coin de sectionnement (5) présente, sur le côté tourné vers l'élément de palier (2), une arête de coupe (4) de forme conique ou arquée.

4. Dispositif pour supporter un levier de pédale selon la revendication 3,
**caractérisé en ce que**
l'élément de palier (2) traverse deux joues (10, 11), écartées l'une de l'autre, du boîtier (3), le levier de pédale (1) est prévu à peu près au milieu entre ces joues (10, 11) sur l'élément de palier (2) et entre le levier de pédale (1) et la surface de joue (14, 15) de la joue (respectivement 10 et 11) associée, il est prévu au moins d'un côté une distance (12, 13) qui reçoit l'arête de coupe (4) du coin de sectionnement (5).

5. Dispositif pour supporter un levier de pédale selon l'une quelconque des revendications 1 à 4,
**caractérisé en ce que**
le boîtier (3) est fixé sur la paroi frontale dans la zone de pied du côté conducteur du véhicule automobile, et le composant de véhicule automobile (7) est une poutre transversale.

6. Dispositif pour supporter un levier de pédale selon l'une quelconque des revendications 1 à 5,
**caractérisé en ce que**
l'élément de palier (2), présentant un point destiné à la rupture (9) pour chaque arête de coupe (4), est un axe de palier en une ou deux parties.

7. Dispositif pour supporter un levier de pédale selon l'une quelconque des revendications 1 à 6,
**caractérisé en ce que**
sur le boîtier (3) est prévu un organe de blocage qui limite un mouvement d'écartement de la pédale en direction de l'habitacle, en cas d'accident.

8. Dispositif pour supporter un levier de pédale selon l'une quelconque des revendications 1 à 7,
**caractérisé en ce que**
le coin de sectionnement (5) présente une sûreté pour sa fixation sur le boîtier (3).
